# FASCICULE DE BREVET EUROPEEN

(11) **EP 1 307 349 B1**
(45) Date de publication et mention de la délivrance du brevet: **17.01.2007**
(21) Numéro de dépôt: 01955341.1
(22) Date de dépôt: 10.07.2001
(51) Int. Cl.: B60C 3/00, B60C 3/04, B60C 15/02

(54) **PNEUMATIQUE AVEC DES FLANCS DE STRUCTURE AMELIOREE**
RADIALE LUFTREIFEN MIT EINER DIE SEITENWÄNDE VERSTÄRKENDEN STRUKTUR
TYRE WITH IMPROVED STRUCTURAL SIDEWALLS

(30) Priorité: 31.07.2000 FR 0010096
(43) Date de publication de la demande: 07.05.2003
(73) Titulaire: Société de Technologie Michelin, 63000 Clermont-Ferrand Cedex (FR); MICHELIN Recherche et Technique S.A., 1763 Granges-Paccot (CH)
(72) Inventeur: MUHLHOFF, Olivier, F-63100 Clermont-Ferrand (FR)
(74) Mandataire: Diernaz, Christian
(86) Numéro de dépôt international: PCT/EP2001/007952
(87) Numéro de publication internationale: WO 2002/009955

(56) Documents cités:
- FR-A- 1 590 025
- US-A- 2 186 178
- US-A- 3 904 463
- US-A- 4 061 172
- US-A- 4 413 663

## Description

L'invention concerne un pneumatique à armature de carcasse semi-radiale ou radiale, pneumatique destiné plus particulièrement à équiper des véhicules pouvant rouler à grande vitesse.

Dans le pneumatique considéré, l'armature de carcasse, dont les éléments de renforcement font avec la direction circonférentielle des angles compris entre 80° et 90°, l'armature étant alors dite radiale, ou dont les éléments font avec la direction circonférentielle des angles pouvant être compris entre 60° et 80°, l'armature étant dite semi-radiale, est ancrée dans chaque bourrelet à une tringle d'ancrage ou de bourrelet. L'armature de carcasse est surmontée radialement d'une armature de sommet formée d'au moins deux nappes d'éléments de renforcement parallèles entre eux dans chaque nappe et croisés d'une nappe à la suivante en faisant avec la direction circonférentielle des angles de faible valeur. Lesdites nappes de sommet croisées sont généralement complétées radialement à l'extérieur par au moins une nappe de câbles textiles circonférentiels.

Les flancs du pneumatique, avec des éléments de renforcement radiaux ou semi-radiaux, sont structurellement les parties les plus souples du dit pneumatique, les dits éléments ayant une résistance généralement calculée pour simplement résister aux efforts de tension imposés par la pression de gonflage. Les éléments de renforcement, dans le cas des pneumatiques considérés, sont de plus, et dans la grande majorité des cas, des éléments textiles, et en conséquence dans l'incapacité totale de résister seuls à des efforts de compression.

Dans le cas des pneumatiques radiaux appelés à travailler à grande vitesse, les problèmes surviennent lorsqu'il y a accélération ou freinage brutal des véhicules, car le couple, qui s'accroît ou décroît très rapidement, ne peut être immédiatement transmis à la bande de roulement du pneumatique qui est en contact avec le sol. Par exemple lors d'une accélération brutale le couple moteur est transmis du moyeu de la roue à la bande de roulement par l'intermédiaire des éléments de renforcement de l'armature de carcasse. La résistance offerte par l'armature de carcasse est insuffisante et les éléments de renforcement sont sujets à des déformations qui entraînent la rotation du bourrelet sur la jante de montage du pneumatique sans aucune transmission de couple. Un phénomène similaire se produit dans le cas d'un freinage urgent à haute vitesse.

Dans le but de réduire l'insuffisance notoire vis à vis des problèmes ci-dessus des pneumatiques radiaux connus, différentes voies ont été explorées : une première voie a consisté à abaisser le rapport de la hauteur du pneumatique sur sa largeur axiale maximale ; une deuxième voie a consisté à avoir une armature de carcasse renforcée dans la région sensible des flancs de pneumatique, par addition d'armatures supplémentaires d'éléments croisés. La multiplication des armatures additionnelles de renforcement de flancs ne résout que partiellement les problèmes posés, le nombre et l'épaisseur de tels renforts étant limités en particulier par l'augmentation de poids, les augmentations de température de fonctionnement et la réduction du confort en roulage qu'ils provoquent.

Le brevet US 2 186 178, dans le but de conférer au pneumatique, plus particulièrement à armature de carcasse radiale, une plus grande stabilité en roulage sans cependant pénaliser le confort, propose de disposer à la jonction entre bourrelet et flanc du pneumatique une tringle additionnelle ou secondaire. L'armature de carcasse et armatures de renforcement additionnelles sont telles que les deux tringles sont des tringles qui servent à ancrer les armatures Il décrit un pneumatique conforme au préambule de la revendication 1.

Le brevet FR 1 590 025 reprend sensiblement le même principe en le perfectionnant par l'apport d'un profil d'armature de carcasse adapté dans le flanc de pneumatique. Dans le pneumatique monté sur sa jante de service et gonflé à sa pression nominale, la portion d'armature de carcasse adjacente à la bande de roulement s'étend jusqu'au-delà de la mi-hauteur de flanc en s'écartant progressivement du plan médian et présentant un profil méridien relativement peu incurvé, alors que la seconde portion intercalée radialement entre la première portion et la tringle d'ancrage d'armature de carcasse a une hauteur radiale réduite et un profil méridien relativement très incurvé, les deux portions décrites étant jointes par un deuxième renfort circonférentiel sous forme de tringle. Le même principe d'une tringle additionnelle placée à la jonction du flanc et du bourrelet est repris par le brevet DE 2 357 265.

Pour ne pas perdre les avantages bien connus conférés par la grande rigidité globale de l'armature de sommet d'un pneumatique radial et réaliser des pneumatiques à grandes performances, l'invention propose une solution d'accroissement des rigidités transversale et longitudinale d'au moins un des flancs basée sur ledit principe d'anneau de renforcement additionnel dans au moins un flanc.

Le pneumatique, conforme à l'invention, comprend une armature de carcasse d'au moins une nappe d'éléments de renforcement parallèles entre eux dans la nappe et faisant avec la direction circonférentielle un angle α tel que 60° ≤ α ≤ 90°, ladite nappe étant ancrée dans chaque bourrelet à au moins un élément annulaire d'ancrage et ladite armature de carcasse étant surmontée radialement d'une armature de sommet, chaque bourrelet étant réuni radialement à une bande de roulement par l'intermédiaire d'un flanc, au moins un flanc comprenant un anneau de renforcement inextensible, caractérisé en ce que, le pneumatique étant vu en section méridienne, monté sur sa jante de service et gonflé à la pression recommandée, chaque anneau additionnel de flanc est situé axialement à l'intérieur de la nappe de carcasse dite axialement extérieure, un profilé de mélange caoutchouteux étant radialement situé entre ledit élément d'ancrage de bourrelet et ledit anneau de flanc, et axialement situé à l'intérieur de la nappe de carcasse dite axialement à l'extérieur, ledit profilé ayant, vu en coupe, une forme allongée et quasiment rectiligne et une épaisseur maximale au moins égale à 3% de la hauteur H du pneumatique sur jante.

Il faut entendre par élément annulaire d'ancrage de bourrelet tout élément qui permet de reprendre les efforts de tension de l'armature de carcasse sous l'effet de la pression de gonflage. Ledit élément peut être, comme connu en soi, une tringle, en général formée de fils ou câbles circonférentiels, ou plus généralement un empilement de plusieurs bandes de fils ou câbles faisant avec la direction circonférentielle un angle nul ou au plus égal à 10°. L'ancrage se fait, comme connu, par l'adhésion, sur une longueur suffisante, de l'armature de carcasse sur l'élément annulaire et la surface d'adhésion pouvant être sous forme demi-torique (c'est le cas de l'enroulement de l'armature de carcasse autour d'une tringle enrobée), ou être une surface cylindrique, tronconique ou sous forme de couronne circulaire (c'est le cas d'une armature de carcasse accolée à ou insérée entre une(des) bande(s) de fils ou câbles circonférentiels ou quasi-circonférentiels).

L'anneau additionnel de flanc est préférentiellement situé radialement à une distance H2 de la base de bourrelet supérieure au tiers de la hauteur H sur jante du pneumatique, ce qui permet de modifier le profil méridien de l'armature de carcasse en particulier dans la zone épaule du pneumatique.

L'anneau additionnel de flanc peut se présenter sous plusieurs formes : il peut être un monofilament de section transversale de dimensions plus ou moins importantes ; il peut être sous forme d'un ensemble câblé, que ce soit une tringle ou un câble proprement dit ; il peut être sous forme d'empilement de bandes de fils ou câbles circonférentiels, l'empilement pouvant être parallèle au plan équatorial ou parallèle à un plan radial.

De manière équivalente, l'anneau additionnel peut être réalisé dans un matériau unique présentant une rigidité d'extension appropriée et dans tous les cas supérieure à la rigidité moyenne des mélanges caoutchouteux ; cet anneau additionnel peut être réalisé notamment en matière plastique, en polyuréthane, en polyamide aromatique, en résine renforcée par différentes fibres (carbone, verre, ...), voire en métal. Cet anneau additionnel peut aussi être constitué de deux matériaux ou plus.

L'anneau additionnel peut être creux pour réaliser un allègement.

De manière également équivalente, l'anneau additionnel de flanc et le profilé de mélange caoutchouteux peuvent être intégrés dans un même élément unique faisant par exemple l'objet d'une réalisation indépendante de la fabrication du pneumatique lui-même et être ensuite incorporé dans le pneumatique au moment de sa fabrication.

Cet élément unique peut être réalisé en matériau unique ou bien dans un matériau composite (c'est à dire un matériau comprenant une matrice renforcée par des renforts dans le but de conférer audit élément des rigidités appropriées). Lorsque l'élément unique remplace un anneau additionnel et un profilé de mélange caoutchouteux, sa section transversale est appropriée pour obtenir la rigidité voulue et par là l'effet mécanique recherché dans le pneumatique. Bien entendu, pour obtenir une bonne liaison entre l'élément unique et les mélanges de caoutchouc du pneumatique, on peut prévoir un traitement de la surface dudit élément qui améliore l'adhésion; des orifices peuvent en outre être réalisés au travers dudit élément pour laisser le passage aux mélanges de caoutchouc du pneumatique en cours de moulage et vulcanisation.

Un facteur essentiel de l'invention réside dans le couplage mécanique réalisé entre l'anneau additionnel de flanc et le bourrelet par l'intermédiaire du profilé de mélange caoutchouteux prolongeant radialement vers l'intérieur ledit anneau.

Pour bénéficier au mieux de cet effet de couplage mécanique, le profilé de mélange caoutchouteux, axialement à l'intérieur de la nappe de carcasse axialement à l'extérieur, a une dureté Shore A au moins égale à 65, de manière à présenter une bonne résistance aux efforts de compression.

La rigidité transversale du pneumatique est fonction de l'inclinaison du segment de droite joignant les centres de gravité des sections méridiennes de l'éléments d'ancrage de bourrelet et de l'anneau additionnel de flanc : ledit segment de droite fait de manière avantageuse un angle φ, ouvert radialement et axialement vers l'extérieur, d'au plus 70° avec la direction axiale.

Afin d'accroître l'efficacité de la transmission des efforts et couples, l'armature de carcasse comprend préférentiellement au moins deux nappes d'éléments de renforcement parallèles entre eux dans chaque nappe et faisant avec la direction circonférentielle un angle compris entre 60° et 90°, au moins une des nappes étant ancrée dans chaque bourrelet par enroulement autour de l'élément d'ancrage et la deuxième nappe dite axialement intérieure étant située axialement à l'intérieur de l'anneau additionnel de flanc et du profilé de caoutchouc entre anneau additionnel et élément d'ancrage de bourrelet.

Ladite armature de carcasse a avantageusement trois nappes de carcasse :
- la nappe axialement extérieure, qui est préférentiellement discontinue et composée de deux demi-nappes d'éléments de renforcement textiles radiaux parallèles entre eux dans chaque demi-nappe en faisant avec la direction circonférentielle un angle pouvant être compris entre 80° et 90°, chaque demi-nappe ayant d'une part une extrémité radialement supérieure sous le bord de l'armature de sommet et d'autre part un bord radialement inférieur avec une extrémité au niveau de l'élément d'ancrage de bourrelet, et étant disposée axialement à l'extérieur du profilé entre élément d'ancrage et anneau de flanc, à l'extérieur de l'anneau de flanc et à l'extérieur, dans la zone haute de flanc,
- de deux nappes principales de carcasse, axialement à l'intérieur, formées d'éléments de renforcement textiles croisés d'une nappe à la suivante en faisant avec la direction circonférentielle des angles compris entre 60° et 80°, et enroulées dans chaque bourrelet autour de l'élément d'ancrage pour former des retournements axialement à l'extérieur du bord de nappe de carcasse axialement à l'extérieur.

Préférentiellement, les nappes d'armature de carcasse sont formées d'éléments de renforcement textiles, tel que polyamide aliphatique ou aromatique, polyester, rayonne, parallèles entre eux dans chaque nappe.

Au moins une armature de renforcement additionnelle peut compléter la structure de chaque bourrelet. Composée d'au moins une nappe d'éléments textiles et/ou métalliques faisant avec la direction circonférentielle un angle compris entre 0° et 45°, ladite nappe pouvant être disposée axialement à l'extérieur ou à l'intérieur des nappes principales d'armature de carcasse, à l'intérieur ou à l'extérieur de la nappe axialement extérieure.

L'épaisseur du profilé en caoutchouc entre armature principale de carcasse et nappe additionnelle, mesurée perpendiculairement à la droite réunissant les centres de gravité de l'élément d'ancrage et de l'anneau additionnel, est minimale sensiblement au niveau desdits élément et anneau, et maximale approximativement vers le milieu géométrique du profilé, en ayant, vu en coupe, une forme allongée et quasiment rectiligne, l'épaisseur maximale étant au moins égale à 3% de la hauteur du pneumatique sur jante.

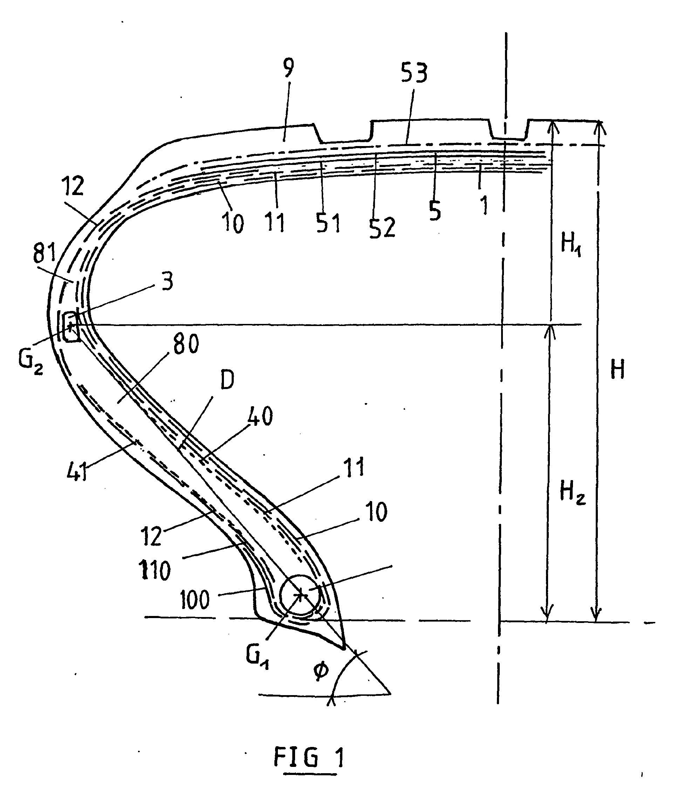

Les caractéristiques et avantages de l'invention seront mieux compris à l'aide du dessin, annexé à la description et ne comportant qu'une seule figure illustrant un exemple non limitatif d'exécution d'un pneumatique conforme à l'invention.

Le pneumatique montré sur la figure lest un pneumatique destiné à l'équipement d'un véhicule haut de gamme. Ledit pneumatique comprend, vu en section méridienne, une bande de roulement 9 reliée aux bourrelets dudit pneumatique par l'intermédiaire de deux flancs. Il est renforcé par une armature de carcasse 1 composée de deux nappes 10 et 11, axialement à l'intérieur et dites principales, continues d'un bourrelet à l'autre et ancrées dans chaque bourrelet à une tringle 2 de type tressé pour former des retournements 100 et 110. Les dites nappes 10 et 11 sont constituées de câbles en polyamide aliphatique, parallèles entre eux dans chaque nappe 10 ou 11, et croisés d'une nappe 10 à la suivante 11 en faisant avec la direction circonférentielle un angle de 74°, ledit angle étant mesuré dans le plan équatorial du pneumatique. Deux demi-nappes de carcasse 12 axialement extérieures complètent l'armature 1, et sont formées des mêmes éléments que ceux constituant les nappes principales 10 et 11 ; chaque demi-nappe 12 a une extrémité inférieure radialement située légèrement au-dessus de la parallèle à l'axe de rotation tangente au contour de la tringle 2, et une extrémité supérieure radialement sous le bord de l'armature de sommet 5. Ladite armature de sommet 5 radialement au-dessous de la bande de roulement est composée d'une armature de travail de deux nappes 51 et 52 de câbles en polyamide aromatique, croisés d'une nappe 51 à la suivante 52 en faisant avec la direction circonférentielle un angle de 34°. De largeurs axiales inégales sensiblement égales à la largeur de bande de roulement 9, les dites nappes de travail 51 et 52 sont surmontées radialement d'une nappe 53 de largeur supérieure aux deux largeurs ci-dessus et obtenue par enroulement d'un câble de polyamide aromatique, ce qui lui confère une direction approximativement circonférentielle.

Un anneau additionnel de renforcement 3 inextensible est disposé dans chacun des flancs du pneumatique, et le centre de gravité G2 de sa section méridienne est radialement situé à une distance H2 de la base du bourrelet égale à 59% de la hauteur H du pneumatique (mesurée sur le pneumatique monté sur jante et gonflé à la pression recommandée par rapport à la base de bourrelet qui est aussi base de jante).

On entend par anneau inextensible un anneau qui, sous une force de tension circonférentielle égale à 10% de sa force de rupture présente un allongement relatif au plus égal à 1%. Par ailleurs, la base d'un bourrelet est par convention la droite parallèle à l'axe de rotation du pneumatique et passant par le point d'intersection de la trace de la paroi verticale de bourrelet avec la génératrice du siège de bourrelet.

L'anneau additionnel 3 divise le flanc, renforcé par l'armature de carcasse, d'une part axialement et d'autre part radialement en deux parties distinctes. La partie axialement intérieure est la partie de flanc renforcée par les nappes principales 10 et 11 de carcasse, alors que la partie axialement extérieure est renforcée par la demi-nappe de carcasse 12. De même, la partie radialement supérieure de faible hauteur radiale H1 est la partie où les nappes de carcasse 10, 11, 12 sont pratiquement axialement superposées, à l'exception de la région, la plus petite possible, du profilé 81, et où le flanc du pneumatique est de faible épaisseur, ce qui correspond à ce qu'on appelle usuellement une partie pneumatique de flanc. La deuxième partie radialement inférieure de forte hauteur H2 est la partie où les nappes de carcasse 10, 11, et 12 sont axialement séparés par un profilé de mélange caoutchouteux 80 de forte épaisseur, et de dureté Shore A élevée, puisqu'égale à 80 ; cette deuxième partie radialement inférieure correspond à ce qu'on appelle usuellement une partie structurelle. La dureté Shore A est mesurée selon la norme ASTM D2240.

L'épaisseur du profilé 80, maximale sensiblement en son milieu, est égale dans le cas étudié à 8 mm et correspond à 4,8% de la hauteur H. Ladite deuxième partie radialement inférieure est fortement inclinée par rapport à la direction axiale. On admet que l'inclinaison de ladite partie est représentée par la direction de la droite D qui réunit les centres de gravité des sections méridiennes respectivement G1 de la tringle d'ancrage 2 et G2 de l'anneau additionnel 3 : ladite droite D fait avec la direction axiale un angle φ ouvert axialement et radialement vers l'extérieur au plus égal à 70°, et dans le cas décrit égal à 56°. En outre, ladite partie radialement inférieure est renforcée, en plus des trois nappes de carcasse 10, 11, et 12 par des armatures de renforcement additionnelles 40 et 41 : l'armature 40, composée d'une seule nappe 40 d'éléments de renforcement en acier faisant avec la direction circonférentielle un angle de 45°, forme avec les deux nappes principales de carcasse 10 et 11 une triangulation, ce qui améliore la résistance aux efforts de compression de la partie radialement inférieure ; de même, l'armature additionnelle 41, composée d'une seule nappe des mêmes éléments que précédemment avec la même orientation, renforce la demi-nappe 12 de carcasse de la partie axialement extérieure.

Le profilé de caoutchouc, axialement entre les deux nappes retournées autour de la tringle d'ancrage et la demi-nappe additionnelle, offre une grande résistance aux efforts de compression et diminue ainsi très fortement l'amplitude de déplacement axial possible de l'anneau de flanc, ce qui conduit à obtenir un rapport force transversale développée entre sol et pneumatique sur force verticale appliquée très élevé pour les faibles angles de dérive.

On ne sort pas du cadre de l'invention si d'autres armatures additionnelles de renforcement sont ajoutées dans les flancs du pneumatique considéré, par exemple une nappe d'éléments de renforcement enroulée autour de l'anneau 3 de flanc pour former deux brins radialement au-dessus dudit anneau, brins axialement adjacents qui peuvent avantageusement remplacer le profilé caoutchouteux 81 entre les nappes 10, 11 et 12.

Dans le cas d'un pneumatique selon l'invention dont un seul flanc comprend un anneau additionnel couplé à un profilé, il est avantageux de monter ce pneumatique sur un véhicule de manière à ce que ce flanc soit placé vers l'extérieur dudit véhicule afin de réduire et limiter les déports latéraux en virage.

En outre, la présence d'un anneau additionnel de flanc, combinée à une grande rigidité de la partie inférieure de flanc permet, en fonction des dimensions hors tout imposées pour le pneumatique monté sur sa jante de montage, l'utilisation d'une jante plus étroite que la jante normalement utilisée pour la même dimension de pneumatique ; il s'ensuit un gain de poids non négligeable pour l'ensemble roulant, un moindre coût et une meilleure protection de la jante.

La structure essentiellement pneumatique de la partie supérieure du flanc a en outre la faculté de faciliter la mise à plat de la bande de roulement sur le sol et ainsi d'augmenter la largeur d'aire de contact entre ledit pneumatique et le sol, tout en conservant audit pneumatique des dimensions normalisées. L'augmentation de volume dé caoutchouc de bande de roulement qui travaille entraîne de multiples avantages et en particulier une amélioration de toutes les performances liées au contact entre le pneumatique et le sol: adhérence, usure, échauffement, comportement, pour ne citer que les performances les plus fortement influencées.

## Revendications

1. Pneumatique comprenant une armature de carcasse (1) d'au moins une nappe (12) d'éléments de renforcement parallèles entre eux dans la nappe et faisant avec la direction circonférentielle un angle α tel que 60°≤α≤90°, ladite nappe (12) étant ancrée dans chaque bourrelet à au moins un élément annulaire d'ancrage (2) et ladite armature de carcasse (1) étant surmontée radialement d'une armature de sommet (5), chaque bourrelet étant réuni radialement à une bande de roulement (9) par l'intermédiaire d'un flanc comprenant un anneau de renforcement (3) inextensible, **caractérisé en ce que**, le pneumatique étant vu en section méridienne, monté sur sa jante de service et gonflé à la pression recommandée, l'anneau additionnel (3) de flanc est situé radialement à une distance H₂ de la base de bourrelet supérieure au tiers de la hauteur H sur jante du pneumatique et axialement à l'intérieur de la nappe de carcasse (12) dite axialement extérieure, un profilé de mélange (80) caoutchouteux étant radialement situé entre ledit élément d'ancrage (2) de bourrelet et ledit anneau (3) de flanc, et axialement situé à l'intérieur de la nappe de carcasse (12) dite axialement à l'extérieur, ledit profilé (80) ayant, vu en coupe, une forme allongée et quasiment rectiligne et une épaisseur maximale au moins égale à 3% de la hauteur H du pneumatique sur jante.

2. Pneumatique selon la revendication 1, **caractérisé en ce** l'armature de carcasse (1) est formée d'au moins deux nappes (10, 12) d'éléments de renforcement parallèles entre eux dans chaque nappe et faisant avec la direction circonférentielle un angle α tel que 60° ≤ α ≤ 90°, au moins une des nappes (10, 12) étant ancrée dans chaque bourrelet par enroulement autour de l'élément d'ancrage de bourrelet (2), la deuxième nappe (10) dite axialement intérieure étant située axialement à l'intérieur de l'anneau additionnel (3) de flanc et du profilé de caoutchouc (80) entre anneau additionnel et élément d'ancrage de bourrelet.

3. Pneumatique selon la revendication 2, **caractérisé en ce que** l'armature de carcasse (1) comprend une troisième (11) nappe axialement intérieure formée d'éléments de renforcement croisés avec les éléments de la première nappe (10) en faisant avec la direction circonférentielle des angles compris entre 60° et 80°, ladite troisième nappe (11) étant enroulée autour de l'élément d'ancrage de bourrelet (2) pour former un retournement (110).

4. Pneumatique selon l'une quelconque des revendications 1 à 3, **caractérisé en ce que** le segment de droite D joignant les deux centres de gravité (G₁, G₂) des sections méridiennes des élément d'ancrage (2) et anneau de flanc (3) fait avec la direction axiale un angle φ d'au plus 70°.

5. Pneumatique selon l'une quelconque des revendications 1 à 4, **caractérisé en ce que** le profilé (80) de mélange caoutchouteux entre les élément d'ancrage et anneau additionnel de flanc a une dureté Shore A au moins égale à 65.

6. Pneumatique selon la revendication 3, **caractérisé en ce que** les nappes de carcasse (10, 11, 12) sont formées d'éléments de renforcement textiles, parallèles entre eux dans chaque nappe.

7. Pneumatique selon la revendication 3, **caractérisé en ce que** la première nappe de carcasse (12) axialement extérieure est discontinue et composée de deux demi-nappes d'éléments de renforcement textiles radiaux, faisant avec la direction circonférentielle un angle compris entre 80° et 90°, chaque demi-nappe ayant d'une part une extrémité radialement supérieure sous le bord de l'armature de sommet (5) et d'autre part un bord radialement inférieur avec une extrémité au niveau de l'élément d'ancrage (2).

8. Pneumatique selon la revendication 1, **caractérisé en ce que** la structure des bourrelet et flanc est complétée par au moins une armature additionnelle, composée d'au moins une nappe (40, 41) d'éléments de renforcement faisant avec la direction circonférentielle un angle compris entre 0° et 45°, ladite nappe (40, 41) pouvant être disposée axialement à l'extérieur ou à l'intérieur des nappes principales (10, 11) d'armature de carcasse, à l'intérieur ou à l'extérieur de la nappe (12) de flanc.

9. Pneumatique comprenant une armature de carcasse (1) d'au moins une nappe (12) d'éléments de renforcement parallèles entre eux dans la nappe et faisant avec la direction circonférentielle un angle α tel que 60°≤α≤90°, ladite nappe (12) étant ancrée dans chaque bourrelet à au moins un élément annulaire d'ancrage (2) et ladite armature de carcasse (1) étant surmontée radialement d'une armature de sommet (5), chaque bourrelet étant réuni radialement à une bande de roulement (9) par l'intermédiaire d'un flanc, un seul flanc comprenant un anneau de renforcement (3) inextensible, **caractérisé en ce que**, le pneumatique étant vu en section méridienne, monté sur sa jante de service et gonflé à la pression recommandée, l'anneau additionnel (3) de flanc est situé radialement à une distance H₂ de la base de bourrelet supérieure au tiers de la hauteur H sur jante du pneumatique et axialement à l'intérieur de la nappe de carcasse (12) dite axialement extérieure, un profilé de mélange (80) caoutchouteux étant radialement situé entre ledit élément d'ancrage (2) de bourrelet et ledit anneau (3) de flanc, et axialement situé à l'intérieur de la nappe de carcasse (12) dite axialement à l'extérieur, ce pneumatique étant destiné à être monté sur un véhicule de manière à ce que le flanc pourvu de l'anneau de renforcement soit à l'extérieur dudit véhicule.

## Claims

1. - Tyre comprising a carcass reinforcement (1) of at least one ply (12) of reinforcing elements parallel to one another within the ply and making with the circumferential direction an angle α such that 60° ≤ α ≤ 90°, the said ply (12) being anchored in each tyre bead to at least one annular anchoring element (2) and the said carcass reinforcement (1) being surmounted radially by a crown reinforcement (5), each bead being connected radially to a tread (9) by a sidewall comprising an inextensible reinforcement ring (3),
**characterised in that**
when the tyre is viewed in meridian cross-section fitted on its operating rim and inflated to the recommended pressure, the additional sidewall ring (3) is located radially a distance H₂ from the base of the bead larger than one-third of the height H of the tyre on its rim and axially inside the carcass ply (12) called the axially outer ply, and a profiled element (80) of rubber mixture is located radially between the said anchoring element (2) in the bead and the said sidewall ring (3), and is located axially inside the carcass ply (12) called the axially outer ply, the said profiled element, viewed in section, having an elongated and almost rectilinear shape and a maximum thickness equal to at least 3% of the height H of the tyre on its rim.

2. - Tyre according to Claim 1,
**characterised in that**
the carcass reinforcement (1) is formed of at least two plies (10, 12) of reinforcing elements parallel to one another within each ply and making with the circumferential direction an angle α such that 60° ≤ α ≤ 90°, at least one of the plies (10, 12) being anchored in each bead by wrapping around the anchoring element (2) in the bead, the second ply (10) called the axially inner ply being located axially inside the additional sidewall ring (3) and the profiled rubber element (80) between the additional ring and the anchoring element in the bead.

3. - Tyre according to Claim 2,
**characterised in that**
the carcass reinforcement (1) comprises a third, axially inner ply (11) formed of reinforcing elements crossed with respect to the elements of the first ply (10) and making with the circumferential direction angles of between 60° and 80°, the said third ply (11) being wrapped around the anchoring element (2) in the bead to form an upturn (110).

4. - Tyre according to any of Claims 1 to 3,
**characterised in that**
the line segment D joining the two centres of gravity (G₁, G₂) of the meridian sections of the anchoring element (2) and the sidewall ring (3), makes with the axial direction an angle φ of at most 70°.

5. - Tyre according to any of Claims 1 to 4,
**characterised in that**
the profiled element (80) of rubber mixture between the anchoring element and the additional sidewall ring has a Shore A hardness of at least 65.

6. - Tyre according to Claim 3,
**characterised in that**
the carcass plies (10, 11, 12) are formed of textile elements, which are parallel to one another within each ply.

7. - Tyre according to Claim 3,
**characterised in that**
the first, axially outer carcass ply (12) is discontinuous and is composed of two half-plies of radial, textile reinforcing elements which make with the circumferential direction an angle between 80° and 90°, each half-ply having on the one hand a radially upper end under the edge of the crown reinforcement (5) and on the other hand a radially lower edge with one end at the level of the anchoring element (2).

8. - Tyre according to Claim 1,
**characterised in that**
the bead and sidewall structure is completed by at least one additional reinforcement consisting of at least one ply (40, 41) of reinforcing elements which make with the circumferential direction an angle of between 0° and 45°, the said ply (40, 41) being able to be arranged outside or inside the main carcass reinforcement plies (10, 11), and inside or outside the sidewall ply (12).

9. - Tyre comprising a carcass reinforcement (1) of at least one ply (12) of reinforcing elements parallel to one another within the ply and making with the circumferential direction an angle α such that 60°≤α≤ 90°, the said ply (12) being anchored in each bead to at least one annular anchoring element (2) and the said carcass reinforcement (1) being surmounted radially by a crown reinforcement (5), each tyre bead being connected radially to a tread (9) by a sidewall, only one sidewall being provided with an inextensible reinforcement ring (3),
**characterised in that**
when the tyre is viewed in meridian cross-section mounted on its operating rim and inflated to the recommended pressure, the additional sidewall ring (3) is located radially a distance H₂ from the base of the bead greater than one-third of the height H of the tyre on its rim and axially inside the carcass ply (12) called the axially outer ply, a profiled element (80) of rubber mixture being located radially between the said anchoring element (2) in the bead and the said sidewall ring (3), and located axially inside the carcass ply (12) called the axially outer ply, the said tyre being intended for fitting to a vehicle so that the sidewall provided with the reinforcement ring is on the outside of the said vehicle.

## Patentansprüche

1. Luftreifen, der eine Karkassenbewehrung (1) aus mindestens einer Lage (12) von Verstärkungselementen aufweist, die in der Lage parallel zueinander verlaufen und mit der Umfangsrichtung einen Winkel α bilden, der so ist, dass 60° ≤ α ≤ 90°, wobei die Lage (12) in jedem Wulst an mindestens einem ringförmigen Verstärkungselement (2) verankert ist, radial über der Karkassenbewehrung (1) eine Scheitelbewehrung (5) liegt, jeder Wulst in radialer Richtung über eine Flanke in einen Laufstreifen (9) übergeht und die Flanke einen nicht dehnbaren Verstärkungsring (3) aufweist, **dadurch gekennzeichnet, dass**, wobei der auf seine Betriebsfelge aufgezogene und auf den Betriebsdruck aufgepumpte Luftreifen im Meridianschnitt betrachtet wird, sich der ergänzende Flankenring (3) radial in einem Abstand H₂ von der Wulstbasis befindet, der größer ist als ein Drittel der Höhe H an der Luftreifenfelge, und axial innen an der als axial außen bezeichneten Karkassenlage (12), wobei sich ein Profilteil aus einer Kautschukmischung (80) radial zwischen dem Verankerungselement (2) des Wulstes und dem Flankenring (3) befindet, und axial innen an der Karkassenlage (12), die als axial außen bezeichnet wird, wobei das Profilteil (80) in der Schnittansicht eine langgestreckte und praktisch geradlinige Form und eine maximale Dicke von zumindest 3 % der Höhe H des Luftreifens auf der Felge aufweist.

2. Luftreifen nach Anspruch 1, **dadurch gekennzeichnet, dass** die Karkassenbewehrung (1) aus zumindest zwei Lagen (10, 12) von Verstärkungselementen gebildet ist, die in jeder Lage parallel zueinander verlaufen und mit der Umfangsrichtung einen Winkel α bilden, der so ist, dass 60° ≤ α ≤ 90°, wobei mindestens eine der Lagen (10, 12) in jedem Wulst durch Hochschlag um das Verankerungselement des Wulstes (2) verankert ist, wobei die zweite Lage (10), die als axial innere Lage bezeichnet wird, in axialer Richtung innen an dem zusätzlichen Flankenring (3) und dem Kautschukprofilteil (80) zwischen dem zusätzlichen Ring und dem Verankerungselement des Wulstes liegt.

3. Luftreifen nach Anspruch 2, **dadurch gekennzeichnet, dass** die Karkassenbewehrung (1) eine dritte Lage (11) umfasst, die axial innen liegt und aus Verstärkungselementen gebildet ist, die mit den Elementen der ersten Lage (10) gekreuzt sind, wobei sie mit der Umfangsrichtung Winkel im Bereich von 60 bis 80° bilden, wobei die dritte Lage (11) um das Verankerungselement des Wulstes (2) zur Bildung eines Hochschlags (110) umgeschlagen ist.

4. Luftreifen nach einem der Ansprüche 1 bis 3, **dadurch gekennzeichnet, dass** der Geradenabschnitt D, der die beiden Schwerpunkte (G₁, G₂) des Meridianschnittes des Verankerungselements (2) und des Flankenrings (3) verbindet, mit der axialen Richtung einen Winkel φ von höchsten 70° bildet.

5. Luftreifen nach einem der Ansprüche 1 bis 4, **dadurch gekennzeichnet, dass** das Profilteil (80) aus einer Kautschukmischung zwischen dem Verankerungselement und dem zusätzlichen Flankenring eine Shore A-Härte von mindestens 65 aufweist.

6. Luftreifen nach Anspruch 3, **dadurch gekennzeichnet, dass** die Karkassenlagen (10, 11, 12) aus textilen Verstärkungselementen gebildet sind, die in jeder Lage parallel zueinander verlaufen.

7. Luftreifen nach Anspruch 3, **dadurch gekennzeichnet, dass** die axial äußere erste Karkassenlage (12) diskontinuierlich ist und aus zwei Halblagen von radialen textilen Verstärkungselementen zusammengesetzt ist, die mit der Umfangsrichtung einen Winkel von 80 bis 90° bilden, wobei jede Halblage einerseits ein radial oberes Ende unter dem Rand der Scheitelbewehrung (5) und andererseits einen radial inneren Rand mit einem Ende auf der Höhe des Verankerungselements (2) aufweist.

8. Luftreifen nach Anspruch 1, **dadurch gekennzeichnet, dass** die Struktur der Wülste und Flanken durch mindestens eine ergänzende Bewehrung vervollständigt wird, die aus mindestens einer Lage (40, 41) von Verstärkungselementen zusammengesetzt ist, die mit der Umfangsrichtung einen Winkel von 0 bis 45° bilden, wobei die Lage (40, 41) axial außen oder innen an den Hauptlagen (10, 11) der Karkassenbewehrung, innen oder außen an der Lage (12) der Flanke angeordnet sein kann.

9. Luftreifen, der eine Karkassenbewehrung (1) von zumindest einer Lage (12) von Verstärkungselementen aufweist, die in der Lage parallel zueinander verlaufen und mit der Umfangsrichtung einen Winkel α bilden, der so ist, dass 60° ≤ α ≤ 90°, wobei die Lage (12) in jedem Wulst an mindestens einem ringförmigen Verankerungselement (2) verankert ist, radial über der Karkassenbewehrung (1) eine Scheitelbewehrung (5) liegt, jeder Wulst radial über eine Flanke in einem Laufstreifen (9) fortgesetzt wird und nur eine Flanke einen nicht dehnbaren Verstärkungsring (3) aufweist, **dadurch gekennzeichnet, dass**, wobei der auf seine Betriebsfelge aufgezogene und auf den Betriebsdruck aufgepumpte Luftreifen im Meridianschnitt betrachtet wird, sich der zusätzliche Flankenring (3) in radialer Richtung in einem Abstand H₂ von der Wulstbasis befindet, der größer ist als ein Drittel der Höhe H an der Reifenfelge, und axial innen an der Karkassenbewehrung (12), die als axial außen bezeichnet wird, wobei ein Profilteil (80) aus einer Kautschukmischung radial zwischen dem Verankerungselement (2) des Wulstes und dem Ring (3) der Flanke liegt, und axial innen an der Karkassenlage (12), die als axial außen bezeichnet wird, wobei der Luftreifen an einem Fahrzeug so montiert werden soll, dass die Flanke, die mit dem Verstärkungsring versehen ist, an dem Fahrzeug außen liegt.
